Europäisches Patentamt

European Patent Office

Office européen des brevets

(11) Numéro de publication : **0 070 227**
**B1**

# (12) FASCICULE DE BREVET EUROPÉEN

(45) Date de publication du fascicule du brevet :
01.10.86

(21) Numéro de dépôt : 82401256.1

(22) Date de dépôt : 05.07.82

(51) Int. Cl.⁴ : **F 16 L 39/04, B 23 B 31/30**

(54) **Dispositif de vérin hydraulique, annulaire, notamment pour la commande d'un mandrin de serrage de pièce sur une machine-outil.**

(30) Priorité : 10.07.81 FR 8113609

(43) Date de publication de la demande :
19.01.83 Bulletin 83/03

(45) Mention de la délivrance du brevet :
01.10.86 Bulletin 86/40

(84) Etats contractants désignés :
DE GB IT

(56) Documents cités :
FR-A- 2 181 562
GB-A- 912 538
GB-A- 2 064 003

(73) Titulaire : GAMET PRECISION
Route d'Epégard
F-27110 Le Neubourg (FR)

(72) Inventeur : Le Moal, Jean Pierre
26 rue Yvan Tourgueneff
F-78380 Bougival (FR)

(74) Mandataire : Lepeudry-Gautherat, Thérèse et al
ARMENGAUD JEUNE CABINET LEPEUDRY 23 boulevard de Strasbourg
F-75010 Paris (FR)

Jouve, 18, rue St-Denis, 75001 Paris, France

## Description

La présente invention concerne des perfectionnements apportés à un dispositif de vérin hydraulique, annulaire, notamment pour la commande d'un mandrin de serrage de pièce sur une machine-outil, du type qui a fait l'objet notamment du document FR-A-2 396 883 au nom de la Demanderesse.

On rappelle que ce brevet français concerne un dispositif de vérin hydraulique, annulaire, comportant un joint hydraulique rotatif coaxial, dont l'arbre est formé par un prolongement tubulaire d'un fond du cylindre du vérin annulaire, lequel prolongement est reçu coaxialement en rotation dans une partie fixe, en forme de couronne, du joint hydraulique, des canalisations principales, dont chacune comprend au moins une gorge annulaire ménagée dans la partie médiane de l'une des deux parois cylindriques constituées par la paroi cylindrique externe du prolongement tubulaire et la paroi cylindrique interne de la partie fixe, coaxiales et en regard l'une de l'autre, les gorges annulaires des canalisations principales sont ménagées entre deux rainures annulaires collectrices — elles-mêmes ménagées dans la partie médiane cylindrique de la paroi interne de la couronne fixe. Ces canalisations principales aboutissent respectivement dans les deux compartiments du vérin, définis par un piston annulaire coulissant dans le cylindre de vérin, et dans chacune desquelles est inséré un clapet anti-retour, qu'une canalisation auxiliaire, servant à commander l'ouverture dudit clapet, relie à l'autre canalisation principale, en amont de son propre clapet. Des moyens sont prévus pour mettre alternativement les entrées des deux canalisations principales en communication l'une avec une source de fluide hydraulique sous pression, et l'autre avec un réservoir de ce fluide à la pression atmosphérique, les deux clapets anti-retour étant logés dans des perçages appropriés ménagés de part et d'autre de l'ouverture centrale du vérin annulaire, dans le fond du cylindre de vérin dont est solidaire le prolongement tubulaire.

Le dispositif de vérin hydraulique selon ce brevet français, qui présente de préférence un certain nombre de caractéristiques techniques originales, tenant notamment à la structure des clapets anti-retour, comprenant un tiroir équipé d'un gicleur et d'une soupape anti-retour, réalisée au moyen d'un anneau en matériau élastique, serré dans une gorge annulaire de section en forme de V dans la surface latérale du tiroir, et au fond de laquelle débouchent des passages pour le fluide hydraulique, et à leur disposition dans des chambres cylindriques ou prismatiques d'axe perpendiculaire à un même plan diamétral du vérin, ainsi qu'à la prolongation, à l'extérieur du joint hydraulique rotatif, d'un manchon tubulaire entraîné par le piston du vérin annulaire, et dont l'extrémité porte un disque de matériau ferromagnétique, dont les positions extrêmes, correspondant à celles du piston, et donc aux positions de serrage et de désserrage de la pièce par le mandrin, sont détectées par des capteurs magnétiques fixés à l'extérieur du vérin, présente en outre la caractéristique que le joint hydraulique rotatif autorise des fuites systématiques de fluide hydraulique vers une enveloppe collectrice munie d'un conduit de drainage, et se trouve muni d'un dispositif collecteur du fluide hydraulique en excès, comportant, au voisinage des paliers prévus aux deux extrémités axiales du joint hydraulique rotatif pour monter en rotation le prolongement tubulaire dans la couronne fixe, deux rainures annulaires aménagées dans cette couronne fixe du joint tournant. Les paliers sont interposés entre le prolongement tubulaire et les deux extrémités axiales de la couronne fixe, au voisinage desquelles sont usinées les deux rainures annulaires collectrices, qui sont mises en communication chacune par un canal radial percé dans la couronne fixe, avec un canal axial percé dans la partie inférieure de cette même couronne fixe, et un ajutage de Venturi est disposé avec son axe sensiblement vertical, de manière à faire communiquer le canal axial avec l'embouchure du conduit de drainage de l'enveloppe collectrice, un intervalle annulaire subsistant entre la paroi interne du conduit de drainage et la paroi externe de l'ajutage de Venturi.

Grâce à cette disposition du joint hydraulique rotatif du dispositif selon le brevet français précité, le fluide hydraulique, qui remplit en fonctionnement les gorges annulaires centrales que comprennent les deux canalisations principales, s'écoule dans l'intervalle radial subsistant entre la paroi cylindrique externe du prolongement tubulaire et la paroi cylindrique interne de la couronne fixe, jusqu'aux deux extrémités axiales de cet intervalle, où une faible quantité de ce fluide assure le graissage des paliers, l'excès de fluide hydraulique étant recueilli dans les rainures annulaires collectrices d'extrémités, d'où il est conduit par les canaux radiaux et le canal axial vers l'ajutage de Venturi, pour faire retour vers le réservoir par le conduit de drainage de l'enveloppe collectrice.

En fonctionnement normal, un film de fluide hydraulique, dont l'épaisseur correspond à la dimension radiale de l'intervalle entre la paroi externe du prolongement tubulaire et la paroi interne de la couronne fixe, s'étend donc entre ces deux parois, de l'une des rainures annulaires collectrices extrêmes à l'autre, sur une distance axiale qui n'est que peu inférieure à la dimension axiale du joint hydraulique rotatif, et le fluide hydraulique de ce film, interposé entre le prolongement tubulaire entraîné en rotation sur lui-même à grande vitesse et la couronne fixe, subi un échauffement important du fait du laminage continuel auquel il est soumis. Cet échauffement est d'autant plus important que la vitesse de rotation du vérin est élevée, et que la dimension radiale de l'intervalle ou jeu radial entre le prolongement tubulaire et la couronne fixe a été volontairement réduite, pour diminuer le débit de fuite du fluide hydraulique par les extrémités axiales du joint hydraulique rotatif. En conséquence, l'échauffement du fluide hydraulique se transmet à la couronne fixe et au prolongement tubulaire, ce dernier étant porté à une température plus élevée que celle de la couronne fixe, en raison de sa position centrale. Il s'établit ainsi un gradient thermique radial de la pièce la plus chaude, à savoir le prolongement tubulaire, vers la partie externe la moins chaude, de la couronne fixe, qui est à l'origine d'une dilatation différentielle entraînant une réduction de la dimension radiale de l'intervalle ou jeu entre le prolongement tubulaire, qui se dilate le plus, étant porté à la température la plus élevée, et la couronne fixe, qui se dilate relativement moins, puisque portée à une température inférieure. Partant, à l'arrêt du dispositif, d'une valeur radiale de ce jeu volontairement faible, pour la raison précitée, ce phénomène de dilatation différentielle peut entraîner, au cours du fonctionnement, un grippage du prolongement tubulaire dans la couronne fixe. Afin de conserver un jeu de fonctionnement suffisant à haute vitesse, c'est-à-dire à température élevée, il a été proposé de prévoir un jeu radial important à froid, puisqu'en plus des effets thermiques il faut tenir compte des défauts d'usinage, essentiellement de concentricité et de forme. Ce jeu radial important à froid entraîne des fuites élevées du fluide hydraulique passant ainsi de la gorge annulaire, reliée à la source de fluide sous pression, vers la gorge adjacente et les rainures collectrices, reliées au réservoir, à la pression atmosphérique. Pour réduire ces fuites, il a ensuite été proposé d'éloigner l'une de l'autre les gorges annulaires et d'éloigner de celles-ci les rainures collectrices, de façon à ainsi contraindre le fluide à parcourir un chemin long et étroit. Mais cette mesure technique favorise l'échauffement de fluide hydraulique, et donc la réduction du jeu radial en fonctionnement en deçà d'une valeur admissible, et il apparaît que les mesures prévues pour remédier à un inconvénient majeur présenté par le dispositif selon le brevet français précité avaient pour conséquence d'amplifier les effets de cet inconvénient.

Par la présente invention, on s'est proposé de modifier la réalisation du joint hydraulique rotatif d'un dispositif du type de celui faisant l'objet du brevet français précité, de façon à réduire l'échauffement provoqué par le frottement du fluide hydraulique entre la couronne fixe et le prolongement tubulaire, tout en réduisant, à froid comme à chaud, le jeu radial entre ces deux éléments à une valeur suffisamment faible pour que le débit de fuite du fluide hydraulique soit maintenu dans des limites acceptables.

A cet effet, le dispositif de vérin hydraulique annulaire selon la présente invention, du type faisant l'objet du brevet français précité, se caractérise en ce que la couronne fixe susdite est réalisée en un matériau présentant un coefficient de dilatation thermique supérieur à celui présenté par le matériau dans lequel est réalisé le prolongement tubulaire, de sorte que l'échauffement du fluide hydraulique soit réduit avec la distance axiale séparant les rainures annulaires collectrices, et que la valeur du jeu radial de fonctionnement entre couronne fixe et prolongement tubulaire reste sensiblement constante à toutes les vitesses.

La valeur du jeu radial de fonctionnement peut alors être réduite sans risque, par construction, en améliorant la qualité et la précision de l'usinage, afin de réduire le débit de fuite à une valeur acceptable, malgré la réduction de la distance axiale entre les rainures collectrices. On peut ainsi obtenir une réduction du jeu radial de fonctionnement et, par réduction de la longueur de la zone où s'effectue le frottement du fluide hydraulique, c'est-à-dire des parties de l'alésage de la couronne fixe qui délimitent les deux gorges et les deux rainures annulaires, une réduction simultanée de l'échauffement.

De préférence, la dimension axiale de la partie médiane cylindrique de la paroi interne de la couronne fixe, c'est-à-dire la longueur de l'alésage de la couronne fixe dans la paroi duquel les gorges centrales et les rainures collectrices sont pratiquées, est de l'ordre de la moitié de la distance axiale séparant les paliers, et qui correspond sensiblement à la longueur ou dimension axiale de la couronne fixe.

Cette partie médiane cylindrique de la paroi interne de la couronne fixe se raccorde aux parties d'extrémités cylindriques de cette paroi interne, recevant les paliers, par des portions évasées de forme conique.

Selon l'invention également, les canaux d'évacuation du fluide hydraulique collecté dans les rainures annulaires collectrices sont percés dans la couronne fixe selon des directions inclinées de la partie médiane de la paroi interne de la couronne fixe vers la paroi externe des parties d'extrémité axiale de cette dernière, ce qui assure leur échauffement, en raison du passage de fluide hydraulique chaud évacué, et permet d'obtenir sensiblement un équilibre thermique dans la couronne fixe selon des directions axiales.

Avantageusement, chacun de ces canaux d'évacuation inclinés, débouchant par son extrémité radiale interne dans l'une des rainures annulaires collectrices, débouche par son extrémité radiale externe dans une rainure, ayant de préférence une section en forme de V, pratiquée dans la paroi externe de la partie d'extrémité axiale correspondante de la couronne fixe, en regard d'une rainure pratiquée dans une entretoise interposée entre la couronne fixe et l'enveloppe collectrice étanche.

Les rainures en regard de la couronne fixe et de l'entretoise assurent la communication des canaux d'évacuation inclinés avec un canal axial, ménagé dans l'entretoise, et dans lequel débouche l'orifice d'entrée de l'ajutage de Venturi radial, s'étendant et débouchant par sa sortie dans le conduit de drainage traversant l'enveloppe collectrice étanche, pour permettre le retour du fluide hydraulique vers le réservoir.

De préférence, les portions de paroi de la couronne fixe et de l'entretoise, dans lesquelles sont pratiquées les rainures de communication en regard, sont cylindriques, coaxiales aux parois en regard de la couronne fixe et du prolongement tubulaire, et des joints d'étanchéité sont prévus dans des gorges de la couronne fixe, de part et d'autre de chacune des rainures de communication de sa paroi externe.

La mise en communication de chacune des gorges centrales des canalisations principales avec soit la source de fluide hydraulique sous pression soit le réservoir de fluide hydraulique à la pression atmosphérique, est assurée au moyen de deux tubulures fixes, dont chacune traverse des passages radiaux dans le prolongement l'un de l'autre de l'enveloppe collectrice et de l'entretoise, et dont l'extrémité radiale interne est vissée dans un alésage radial taraudé de la couronne fixe, débouchant dans l'une des gorges centrales.

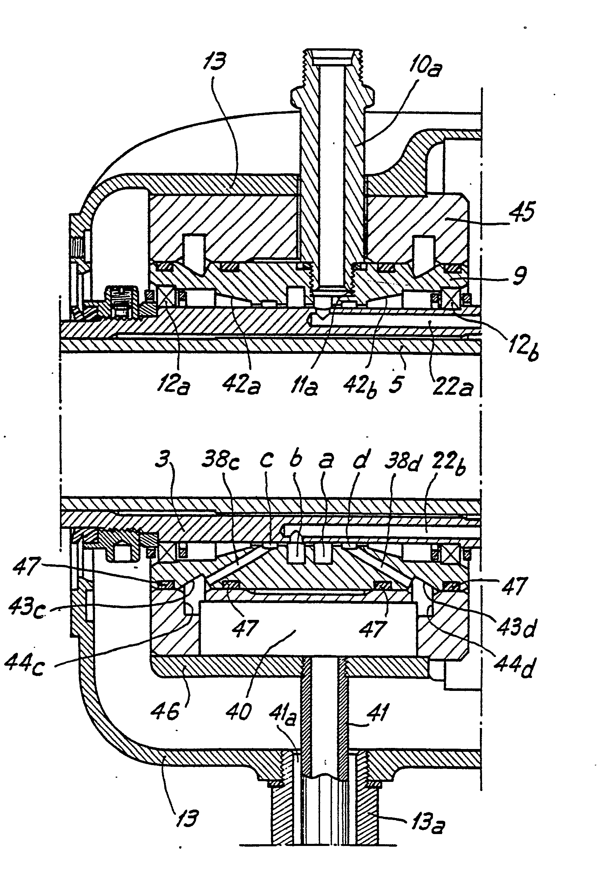

La présente invention sera mieux comprise à l'aide d'un exemple particulier de réalisation, décrit ci-après, de façon non limitative, en référence à la figure unique, qui représente en coupe axiale le joint hydraulique rotatif d'un dispositif de vérin hydraulique, annulaire, selon le brevet français précité, auquel on se reportera avantageusement pour obtenir toutes précisions sur la structure générale du dispositif, et donc la description doit être considérée comme faisant partie de la présente description.

On rappelle seulement qu'un tel dispositif est essentiellement constitué par un corps de cylindre, coopérant avec un premier fond de cylindre, pouvant être fixé à l'extrémité d'une broche creuse solidaire de la machine-outil, par l'intermédiaire de vis engagée dans des trous taraudés, et avec un second fond de cylindre, muni, du côté opposé au corps de cylindre, d'un prolongement tubulaire 3, dont le diamètre intérieur correspond sensiblement à celui des ouvertures centrales coaxiales l'une de l'autre des deux fonds de cylindre, pour définir une chambre de cylindre, dans laquelle est monté coulissant avec étanchéité un piston annulaire, divisant la chambre en deux compartiments isolés de façon étanche l'un par rapport à l'autre au moyen de joints d'étanchéité appropriés. Le piston annulaire est porté par un manchon tubulaire 5, qui est monté coulissant dans le prolongement tubulaire 3, sur une course correspondant à celle du piston annulaire, de façon à exercer une traction vers la droite ou vers la gauche de la figure unique sur un organe (non représenté) dont une première extrémité est solidarisée, par exemple par vissage, à l'extrémité droite (non représentée) du manchon tubulaire 5, tandis que son autre extrémité actionne le mandrin de serrage d'une machine-outil, lequel mandrin est en position de désserrage ou de serrage de la pièce lorsque le piston annulaire et le manchon tubulaire 5 occupent l'une ou l'autre de leurs positions extrêmes.

Comme représenté sur la figure unique annexée, le prolongement tubulaire 3 de l'un des fonds du cylindre constitue l'arbre d'un joint hydraulique rotatif de type coaxial, dont la partie fixe 9 est en forme de couronne, de paroi radiale externe cylindrique, et présentant un passage axial, dont la partie médiane est constituée par un alésage de diamètre légèrement supérieur au diamètre externe du prolongement tubulaire 3, lequel présente une épaisseur radiale faible par rapport à son diamètre intérieur. Dans la partie médiane cylindrique de la paroi du passage axial de la couronne fixe 9, appelée ci-après paroi interne de la couronne 9, sont ménagées deux gorges annulaires centrales a et b et deux rainures annulaires latérales c et d. Chaque gorge annulaire centrale, telle que a, débouche radialement vers l'extérieur dans un canal radial taraudé tel que $11_a$, percé dans la couronne fixe 9, et des canaux axiaux $22_a$ et $22_b$, constituant les sections d'amont des canalisations principales reliant les compartiments du vérin à la source sous pression ou au réservoir de fluide hydraulique, et percés dans l'épaisseur du prolongement tubulaire 3, débouchent chacun en regard de l'une des gorges centrales a et b. Le prolongement tubulaire 3 est monté en rotation dans la couronne fixe 9 au moyen de deux paliers à rouleaux $12_a$ et $12_b$ interposés entre le prolongement tubulaire 3 et les parties cylindriques d'extrémité de la paroi interne de la couronne fixe 9, auxquelles la partie médiane se raccorde par des parties évasées de forme tronconique $42_a$ et $42_b$, la longueur de la partie médiane étant légèrement inférieure à la moitié de la distance axiale séparant les paliers $12_a$ et $12_b$, ce qui correspond approximativement à la longueur de la couronne fixe 9.

Dans les deux rainures annulaires latérales c et d, ménagées de part et d'autre des deux gorges annulaires centrales a et b dans la partie médiane cylindrique de la paroi interne de la couronne fixe 9, débouche l'extrémité radiale interne des canaux $38_c$ et $38_d$ percés dans la couronne fixe 9 selon des directions inclinées de la partie médiane de la paroi interne de cette dernière vers les parties d'extrémité axiales de la paroi externe cylindrique de cette même couronne fixe 9. Les extrémités radiales externes des canaux inclinés $38_c$ et $38_d$ débouchent dans des rainures annulaires $43_c$ et $43_d$, de section en forme de V, pratiquées dans les parties d'extrémité de la paroi cylindrique externe de la couronne fixe 9, chacune en regard de l'une des deux rainures annulaires $44_c$ et $44_d$, ménagées dans la paroi cylindrique interne d'une entretoise annulaire 45, assurant le positionnement convenable de la couronne fixe 9 dans une enveloppe collectrice étanche 13, munie à sa partie inférieure d'un conduit de drainage $13_a$, et recevant l'ensemble du vérin annulaire et du joint hydraulique rotatif.

Ces rainures annulaires $44_c$ et $44_d$ débouchent dans un canal axial 40, également ménagé dans l'entretoise annulaire 45, à la partie inférieure de cette dernière, et fermé par une cloison interne 46 présentant un passage radial taraudé dans lequel est vissée une extrémité d'un ajutage de Venturi 41, s'étendant et débouchant par son autre extrémité dans le conduit de drainage 13$_a$, en délimitant un intervalle annulaire 41$_a$ entre la paroi interne de ce dernier et la paroi externe de l'ajutage 41. Les canaux inclinés 38$_c$ et 38$_d$ et les rainures de communication en regard 43$_c$, 43$_d$ et... 44$_c$, 44$_d$ assurent donc la mise en communication des rainures latérales c et d avec le canal axial 40, lui-même en communication avec le conduit de drainage 13$_a$ par l'intermédiaire de l'ajutage de Venturi 41, et des joints d'étanchéité 47 sont prévus dans des gorges annulaires ménagées dans les parties cylindriques d'extrémité axiale de la paroi externe de la couronne fixe 9, de part et d'autre de ces rainures en V 43$_c$ et 43$_d$, pour assurer l'étanchéité entre les parois en regard de la couronne fixe 9 et de l'entretoise 45, lesdites parois étant coaxiales aux parois en regard de la couronne fixe 9 et du prolongement tubulaire 3.

La mise en communication de chacune des gorges centrales a et b avec la source de fluide hydraulique sous pression ou avec le réservoir de fluide à la pression atmosphérique est assurée au moyen de deux tubulures fixes, telles que 10$_a$, dont chacune traverse des passages radiaux dans le prolongement l'un de l'autre de l'enveloppe collectrice 13 et de l'entretoise 45, et dont l'extrémité radiale interne est vissée dans l'alésage taraudé tel que 11$_a$, lequel débouche dans la gorge centrale correspondante a.

Grâce à cette disposition, le fluide hydraulique qui remplit en fonctionnement les gorges centrales a et b, s'écoule par le jeu radial subsistant entre le prolongement tubulaire 3 et la couronne fixe 9, jusqu'aux rainures annulaires collectrices c et d. La faible distance axiale qui sépare les rainures collectrices c et d des gorges centrales a et b entraîne une réduction de l'échauffement provoqué par le laminage du fluide entre la couronne fixe 9 et le prolongement tubulaire 3. Cependant, le débit de fuite, qui tend à augmenter en raison de cette faible distance, est maintenu dans des limites acceptables en donnant par construction, une faible valeur au jeu radial entre le prolongement tubulaire 3 et la couronne fixe 9, et en réalisant cette dernière en un matériau ayant un coefficient de dilation thermique supérieur à celui du matériau dans lequel est réalisé le prolongement tubulaire 3, de sorte que le jeu radial initial puisse être maintenu sensiblement constant, en fonctionnement, quelle que soit la vitesse de rotation, par l'effet de compensation assuré par des coefficients de dilatation thermique différents sur les éléments portés à des températures différentes, puisque l'élément de plus grand coefficient de dilatation thermique est celui recevant un moindre échauffement, sans risque de grippage à haute vitesse pour le joint hydraulique rotatif, ni fuite importante au démarrage et à faible vitesse.

Le fluide hydraulique collecté dans les rainures latérales c et d est retourné au réservoir par les canaux inclinés 38$_c$ et 38$_d$, les rainures de communication 43$_c$-43$_d$ et 44$_c$-44$_d$, le canal axial 40, l'ajutage de Venturi 41 et le conduit de drainage 13$_a$, en produisant une légère dépression dans l'enveloppe collectrice 13, comme cela est décrit et avec les conséquences mentionnées dans le brevet français précité, auquel on se référera pour ce qui concerne les autres parties constitutives du dispositif de vérin hydraulique, annulaire, notamment la structure et la disposition des clapets anti-retour, ainsi que le détecteur de position du vérin. On notera également, que la position inclinée des canaux 38$_c$ et 38$_d$ permet d'assurer l'échauffement des parties latérales de la couronne fixe 9, de sorte que cette dernière se trouve sensiblement en équilibre thermique selon des directions axiales.

Sur la coupe axiale représentée par la figure annexée, n'apparaissent que deux canaux inclinés 38$_c$ et 38$_d$, mais il est à noter, en fait, qu'une pluralité de tels canaux inclinés, uniformément répartis dans la couronne fixe 9, autour de son axe, débouchent dans les rainures collectrices c et d.

**Revendications**

1. Dispositif de vérin hydraulique annulaire, notamment pour la commande d'un mandrin de serrage de pièce sur une machine-outil, comportant un joint hydraulique rotatif coaxial, dont l'arbre est formé par un prolongement tubulaire (3) d'un fond du cylindre du vérin annulaire, reçu coaxialement en rotation dans une partie fixe (9) en forme de couronne, deux canalisations principales (22$_a$-22$_b$), dont chacune comprend au moins une gorge annulaire (a, b) ménagée dans la partie médiane cylindrique de l'une des deux parois coaxiales et en regard l'une de l'autre que constituent la paroi externe du prolongement tubulaire (3) et la paroi interne de la partie fixe (9) dont les gorges annulaires (a et b) des canalisations principales sont ménagées entre deux rainures annulaires collectrices (c et d) — elles mêmes ménagées dans la partie médiane cylindrique de la paroi interne de la couronne fixe (9) — lesdites canalisations principales aboutissant respectivement dans deux compartiments définis par un piston annulaire dans le cylindre du vérin, et dans chacune desquelles est inséré un clapet anti-retour, qu'une canalisation auxiliaire, servant à commander l'ouverture dudit clapet, relie à l'autre canalisation principale (22$_a$-22$_b$), en amont de son propre clapet, ainsi que des moyens pour mettre alternativement les entrées des deux canalisations principales en communication l'une avec une source de fluide hydraulique sous pression, et l'autre avec un réservoir de ce fluide à la pression atmosphérique, les deux clapets anti-retour étant logés dans des perçages appropriés, ménagés de part et d'autre de l'ouverture centrale du vérin annulaire, dans le fond du cylindre de vérin qui est solidaire du prolongement tubulaire (3), caractérisé en ce que la couronne fixe (9) est réalisée en un matériau présentant un coefficient de dilatation thermique supérieur à celui présenté par le matériau dans lequel est réalisé le prolongement tubulaire (3), de sorte que l'échauffement du fluide hydraulique soit réduit avec la distance axiale séparant les rainures annulaires collectrices (c et d), et que la valeur du jeu radial de fonctionnement entre la couronne fixe (9) et le prolongement tubulaire (3) reste sensiblement constante à toutes les vitesses de rotation.

2. Dispositif selon la revendication 1 caractérisé en ce que la dimension axiale de la partie médiane cylindrique de la paroi interne de la couronne fixe (9) est de l'ordre de la moitié de la distance axiale séparant des paliers ($12_a$ et $12_b$) interposés entre les extrémités axiales du prolongement tubulaire (3) et de la couronne fixe (9), et qui correspond sensiblement à la longueur ou dimension axiale de la couronne fixe (9).

3. Dispositif selon la revendication 2 caractérisé en ce que la partie médiane cylindrique de la paroi interne de la couronne fixe (9) se raccorde aux parties d'extrémités cylindriques de cette paroi interne, recevant les paliers ($12_a$-$12_b$), par des portions évasées de forme conique ($42_a$-$42_b$).

4. Dispositif selon l'une quelconque des revendications 1 à 3, caractérisé en ce que des canaux d'évacuation ($38_c$-$38_d$) du fluide hydraulique collecté dans les rainures annulaires collectrices (c et d) sont percés dans la couronne fixe (9) selon des directions inclinées de la partie médiane de la paroi interne de la couronne fixe (9) vers la paroi externe des parties d'extrémités axiales de cette dernière.

5. Dispositif selon la revendication 4, caractérisé en ce que chacun des canaux d'évacuation inclinés ($38_c$-$38_d$), débouchant par son extrémité radiale interne dans l'une des rainures annulaires collectrices (c et d), débouche par son extrémité radiale externe dans une rainure ($43_c$-$43_d$) ayant de préférence une section en forme de V, pratiquée dans la paroi externe de la partie d'extrémité axiale correspondante de la couronne fixe (9), en regard d'une rainure ($44_c$-$44_d$) pratiquée dans une entretoise (45) interposée entre la couronne fixe (9) et une enveloppe collectrice étanche (13).

6. Dispositif selon la revendication 5, caractérisé en ce que les rainures ($43_c$-$43_d$ et $44_c$-$44_d$) en regard de la couronne fixe (9) et de l'entretoise (45) assurent la communication des canaux d'évacuation inclinés ($38_c$-$38_d$) avec un canal axial (40) ménagé dans l'entretoise (45), et dans lequel débouche l'orifice d'entrée d'un ajutage de Venturi (41) radial s'étendant et débouchant par sa sortie dans un conduit de drainage ($13_a$) traversant l'enveloppe collectrice étanche (13) pour permettre le retour du fluide hydraulique vers le réservoir.

7. Dispositif selon l'une des revendications 5 et 6, caractérisé en ce que les parties de paroi de la couronne fixe (9) et de l'entretoise (45) dans lesquelles sont pratiquées les rainures de communication ($43_c$-$43_d$ et $44_c$-$44_d$) en regard sont cylindriques, coaxiales aux parois en regard de la couronne fixe (9) et du prolongement tubulaire (3), et des joints d'étanchéité (47) sont prévus dans les gorges de la couronne fixe (9), de part et d'autre de chacune des rainures de communication ($43_c$-$43_d$) de sa paroi externe.

8. Dispositif selon l'une des revendications 1 à 7 précédentes, caractérisé en ce que la mise en communication de chacune des gorges centrales (a et b) des canalisations principales avec soit la source de fluide hydraulique sous pression soit le réservoir de fluide hydraulique à la pression atmosphérique est assurée au moyen de deux tubulures fixes (telles que $10_a$), dont chacune traverse des passages radiaux dans le prolongement l'un de l'autre de l'enveloppe collectrice (13) et de l'entretoise (45), et dont l'extrémité radiale interne est vissée dans un alésage radial taraudé (tel $11_a$) de la couronne fixe (9), débouchant dans l'une des gorges centrales (telles que a).

**Claims**

1. Annular hydraulic jack device, in particular for operating a chuck for clamping parts on a machine tool, comprising a coaxial rotating hydraulic seal, the shaft of which is formed by a tubular extension (3) of an end of the cylinder of the hydraulic jack, received coaxially in rotation in a fixed part (9) in the form of a ring, two main ducts ($22_a$-$22_b$), each of which comprises at least one annular groove (a, b) provided in the cylindrical middle part of one of the two coaxial and opposite walls which are formed by the external wall of the tubular extension (3) and the internal wall of the fixed part (9), the annular grooves (a and b) of the main ducts of which are provided between two annular collecting grooves (c and d) — themselves provided in the cylindrical middle part of the internal wall of the fixed ring (9) — and the said main ducts leading, respectively, into two compartments defined by an annular piston inside the cylinder of the jack, and inside each of which there is provided a non-return valve which an auxiliary duct, serving to actuate opening of the said valve, joins to the other main duct ($22_a$-$22_b$) upstream of its own valve, as well as means for alternately connecting one of the inlets of the two main ducts to a source of pressurised hydraulic fluid and the other one to a reservoir storing this fluid at atmospheric pressure, the two non-return valves being accommodated in suitable bores provided on either side of the central opening of the annular jack, in the end of the jack cylinder which is integral with the tubular extension, characterized in that the fixed ring (9) is made of a material having a heat expansion coefficient greater than that of the material from which the tubular extension (3) is made, so that heating of the hydraulic fluid is reduced by the axial distance separating the annular collecting grooves (c and d) and so that the value of the radial operational play between the fixed ring (9) and the tubular extension (3) remains substantially constant at all rotational speeds.

2. Device according to Claim 1, characterized in that the axial dimension of the cylindrical middle part of the internal wall of the fixed ring (9) is of the order of half the axial distance which separates bearings ($12_a$ and $12_b$) located between the axial ends of the tubular extension (3) and the fixed ring (9) and which corresponds substantially to the length or axial dimension of the fixed ring (9).

3. Device according to Claim 2, characterized in that the cylindrical middle part of the internal wall of the fixed ring (9) is joined to the cylindrical end parts of this internal wall, receiving the bearings ($12_a$-$12_b$), by flared cone-shaped portions ($42_a$-$42_b$).

4. Device according to any one of Claims 1 to 3, characterized in that channels ($38_c$-$38_d$) for discharging the hydraulic fluid collected in the annular collecting grooves (c and d) are bored in the fixed ring (9) in inclined directions from the middle part of the internal wall of the fixed ring (9) towards the external wall of the axial end parts of the latter.

5. Device according to Claim 4, characterized in that each of the inclined discharge channels ($38_c$-$38_d$) emerging, via its internal radial end, inside one of the annular collecting grooves (c and d) leads, with its external radial end, into a groove ($43_c$-$43_d$) which preferably has a V-shaped cross-section and is provided in the external wall of the corresponding axial end part of the fixed ring (9), opposite a groove ($44_c$-$44_d$) provided in a spacer member (45) located between the fixed ring (9) and a sealed collector casing (13).

6. Device according to Claim 5, characterized in that the opposite grooves ($43_c$-$43_d$ and $44_c$-$44_d$) of the fixed ring (9) and of the spacer member (45) ensure communication of the inclined discharge channels ($38_c$-$38_d$) with an axial channel (40) which is provided in the spacer member (45) and inside which there emerges the inlet orifice of a radial Venturi nozzle (41) extending and leading, via its outlet, into a drainage pipe ($13_a$) passing through the sealed collector casing (13) so as to allow the hydraulic fluid to return towards the reservoir.

7. Device according to either one of Claims 5 and 6, characterized in that the wall parts of the fixed ring (9) and of the spacer member (45) in which the opposite communication grooves ($43_c$-$43_d$ and $44_c$-$44_d$) are provided are cylindrical and coaxial in relation to the opposite walls of the fixed ring (9) and of the tubular extension (3), and seals (47) are provided in the grooves of the fixed ring (9), on either side of each of the communication grooves ($43_c$-$43_d$) of its external wall.

8. Device according to any one of the preceding Claims 1 to 7, characterized in that each of the central grooves (a and b) of the main ducts is connected to either the pressurised hydraulic fluid source or to the reservoir containing hydraulic fluid at atmospheric pressure by means of two fixed tubes (such as $10_a$), each of which passes through radial passages in the extension of the collector casing (13) and the spacer member (45) from each other and the internal radial end of which is screwed into a tapped radial bore (such as $11_a$) of the fixed ring (9), leading into one of the central grooves (such as « a »).

**Patentansprüche**

1. Vorrichtung für einen ringförmigen hydraulischen Kraftzylinder, insbesondere für die Betätigung eines Spannfutters einer Werkzeugmaschine, der mit einem koaxialen, drehbaren hydraulischen Anschlußstück versehen ist, dessen Welle von einer rohrförmigen Verlängerung (3) eines Bodens des Zylinders der ringförmigen Kraftzylindereinheit gebildet wird, die koaxial drehbar in einem festen Teil (9) in Form eines Ringes aufgenommen wird, wobei zwei Hauptleitungen ($22_a$ bis $22_b$) vorgesehen sind, von denen jede mindestens eine Ringnut (a, b) aufweist, die im mittleren zylindrischen Teil einer der beiden koaxialen und gegenüberstehenden Wände angeordnet sind, welche die Außenwand der rohrförmigen Verlängerung (3) und die Innenwand des festen Teiles (9) bilden, wobei die Ringnuten (a und b) der Hauptleitungen zwischen zwei Sammelrillen (c und d) angeordnet sind, die ihrerseits im mittleren zylindrischen Teil der Innenwand des festen Ringes (9) angebracht sind und wobei die Hauptleitungen jeweils in zwei Räume münden, die von einem Ringkolben im Kraftzylinder begrenzt werden und in die jeweils eine Rückschlagklappe eingesetzt ist sowie eine Hilfsleitung vorgesehen ist, die zum Öffnen dieser Klappe dient, die stromaufwärts der zugeordneten Klappe mit der anderen Hauptleitung ($22_a$, $22_b$) verbunden ist, wobei ferner Mittel vorgesehen sind, um die Eintrittsöffnungen der beiden Hauptleitungen jeweils mit einer unter Druck stehenden Flüssigkeitsquelle bzw. mit einem Reservoir für diese Flüssigkeit in Verbindung zu bringen, das unter atmosphärischem Druck steht, wobei die beiden Rückschlagklappen in entsprechenden Bohrungen untergebracht sind, welche zu beiden Seiten der zentralen Öffnung des Ringkolbens im Boden des Kraftzylinders angeordnet sind, der einteilig mit der rohrförmigen Verlängerung (3) ausgebildet ist, dadurch gekennzeichnet, daß der feste Ring (9) aus einem Material hergestellt ist, das einen Wärmeausdehnungskoeffizienten aufweist, welcher größer ist als jener des Materiales, aus dem die rohrförmige Verlängerung (3) besteht, so daß durch den axialen Abstand zwischen den beiden ringförmigen Sammelrillen (c und d) die Erwärmung der hydraulischen Flüssigkeit reduziert wird und die Größe des im Betrieb auftretenden Radialspieles zwischen dem festen Ring (9) und der rohrförmigen Verlängerung (3) bei allen Rotationsgeschwindigkeiten im wesentlichen konstant bleibt.

2. Einrichtung nach Anspruch 1, dadurch gekennzeichnet, daß die axiale Ausdehnung des mittleren zylindrischen Teiles der Innenwand des festen Ringes (9) in der Größenordnung der Hälfte des axialen Abstandes liegt, der zwischen den Lagern ($12_a$, $12_b$) liegt, die zwischen die äußersten axialen Enden der rohrförmigen Verlängerung (3) und des festen Ringes (9) eingesetzt sind und der im wesentlichen der Länge oder der Axialabmessung des festen Ringes (9) entspricht.

3. Vorrichtung nach Anspruch 2, dadurch gekennzeichnet, daß der mittlere zylindrische Teil der Innenwand des festen Ringes (9) über sich konisch erweiternde Teile ($42_a$, $42_b$) an die äußeren zylindrischen Teile der Innenwand angrenzen, welche die Lager ($12_a$, $12_b$) aufnehmen.

4. Vorrichtung nach einem der Ansprüche 1 bis 3, dadurch gekennzeichnet, daß die Absaugleitungen ($38_c$, $38_d$) für das hydraulische Medium, das in den Sammelrillen (c, d) aufgenommen wurde, in dem festen Ring (9) als Bohrungen verlaufen, die schräg zu dem mittleren Teil der Innenwand des festen Ringes (9) in Richtung zur Außenwand der axial äußeren Teile desselben angeordnet sind.

5. Vorrichtung nach Anspruch 4, dadurch gekennzeichnet, daß jeder der schrägen Absaugkanäle ($38_c$, $38_d$) mit seinem radial innen liegenden Ende in eine der Sammelrillen (c, d) und mit seinem radial äußeren Ende in einer Rille ($43_c$, $43_d$) mündet, die vorzugsweise einen V-förmigen Querschnitt aufweist und in der Außenwand des axial äußersten zugeordneten Teiles des festen Ringes (9) gegenüber einer Rille ($44_c$, $44_d$) angeordnet ist, welche in einer Halterung verläuft, die zwischen dem festen Ring (9) und einem abgedichteten Sammelgehäuse (13) vorgesehen ist.

6. Vorrichtung nach Anspruch 5, dadurch gekennzeichnet, daß die Rillen ($43_c$, $43_d$ und $44_c$,

$44_d$) in dem festen Ring (9) und in der Halterung (45) die Verbindung der schrägen Absaugkanäle ($38_c$, $38_d$) mit einer axialen Leitung (40) herstellen, die in der Halterung (45) angeordnet ist und in welche die Eintrittsöffnung eines Venturi-Rohres (41) mündet, das sich radial erstreckt und das mit seinem Ausgang in einer Leckleitung ($13_a$) mündet, die durch das dichte Sammelgehäuse (13) verläuft, um den Rückfluß der hydraulischen Flüssigkeit in das Reservoir zu ermöglichen.

7. Vorrichtung nach einem der Ansprüche 5 und 6, dadurch gekennzeichnet, daß die Teile der Wand des festen Ringes (9) und der Halterung (45), in denen die Verbindungsrillen ($43_c$, $43_d$, $44_c$, $44_d$) gegenüberliegend angeordnet sind, zylindrisch ausgebildet sind und koaxial zu den gegenüberliegenden Wänden des festen Ringes (9) und der rohrförmigen Verlängerung (3) angeordnet sind, und daß Dichtungen (47) in Nuten des festen Ringes (9) zu beiden Seiten jeder der Verbindungsrillen ($43_c$, $43_d$) auf der Außenwand vorgesehen sind.

8. Vorrichtung nach einem der Ansprüche 1 bis 7, dadurch gekennzeichnet, daß die Verbindung jeder der zentralen Nuten (a, b) der Hauptleitungen entweder mit der unter Druck stehenden Flüssigkeitsquelle oder mit dem Reservoir der unter Atmosphärendruck stehenden Flüssigkeit mit Hilfe von zwei festen Rohren (wie z. B. $10_a$) erreicht wird, von denen jedes radiale Durchgänge im Verlauf sowohl des Sammelgehäuses (13) als auch der Halterung (45) durchquert, wobei die radial inneren Enden jeweils in einer radial verlaufenden Gewindeöffnung (wie z. B. $11_a$) des festen Ringes (9) verschraubt sind, die ihrerseits in einer der zentralen Nuten (wie z. B. a) münden.